(19) **Europäisches Patentamt / European Patent Office / Office européen des brevets**

(11) **EP 2 788 645 B1**

(12) **FASCICULE DE BREVET EUROPEEN**

(45) Date de publication et mention de la délivrance du brevet:
**04.11.2015 Bulletin 2015/45**

(21) Numéro de dépôt: **12794990.7**

(22) Date de dépôt: **05.12.2012**

(51) Int Cl.:
*F16L 13/06* *(2006.01)*     *F16L 33/01* *(2006.01)*

(86) Numéro de dépôt international:
**PCT/EP2012/074426**

(87) Numéro de publication internationale:
**WO 2013/083597 (13.06.2013 Gazette 2013/24)**

(54) **ENSEMBLE D'UN EMBOUT DE CONNEXION ET D'UNE CONDUITE FLEXIBLE DE TRANSPORT D'UN FLUIDE CRYOGÉNIQUE**

ANORDNUNG MIT EINEM ANSCHLUSSSTÜCK UND SCHLAUCH ZUM TRANSPORT EINER KRYOGENEN FLÜSSIGKEIT

ASSEMBLY COMPRISING A CONNECTION PIECE AND A FLEXIBLE HOSE FOR TRANSPORTING A CRYOGENIC FLUID

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.12.2011 FR 1161285**

(43) Date de publication de la demande:
**15.10.2014 Bulletin 2014/42**

(73) Titulaire: **Technip France**
**92400 Courbevoie (FR)**

(72) Inventeurs:
• **LAMOURETTE, Christine**
  **F-78690 Les Essarts Le Roi (FR)**
• **GEREZ, Jean-Michel**
  **F-75015 Paris (FR)**
• **PREVOST, Pascal**
  **F-76490 Villequier (FR)**

(74) Mandataire: **Blot, Philippe Robert Emile**
**Cabinet Lavoix**
**2, place d'Estienne d'Orves**
**75441 Paris Cedex 09 (FR)**

(56) Documents cités:
**EP-A1- 0 475 328     WO-A1-01/07818**
**WO-A1-99/19656     WO-A1-2011/092440**

EP 2 788 645 B1

**Description**

La présente invention concerne un ensemble d'un embout de connexion et d'une conduite flexible de transport d'un fluide cryogénique.

Un fluide cryogénique issu par exemple d'un procédé de liquéfaction de gaz est par exemple du gaz naturel liquéfié présentant une température inférieure à - 160°C.

Le transport de ce genre de fluide, notamment depuis une unité de liquéfaction vers un navire de transport ou depuis un navire de transport vers une unité de stockage, est réalisé généralement au moyen d'une conduite flexible de transport ayant un diamètre intérieur de l'ordre de 400 mm de façon à assurer un débit élevé et un transbordement rapide.

Les conduites flexibles utilisées pour effectuer ces opérations en milieu off-shore sont le plus souvent classées en deux catégories, les conduites flexibles aériennes et les conduites flexibles flottantes ou sous-marines.

Dans le cas d'une configuration de transbordement de type côte à côte dans laquelle le bateau est amené le long d'un quai ou d'une unité flottante, la conduite flexible aérienne a une longueur de l'ordre de 40 à 70 mètres. Dans le cas d'une configuration du type tandem dans laquelle le navire est amené à la poupe ou à la proue de l'unité flottante, le navire et l'unité flottante étant sensiblement alignés, la conduite flexible aérienne a une longueur de l'ordre de 100 à 170 mètres. La configuration côte à côte nécessite une conduite flexible plus résistante que dans l'autre configuration.

Pour un transbordement entre un navire et une unité flottante, au moyen d'une conduite flexible flottante ou sous-marine, cette conduite flexible a une longueur qui peut atteindre environ 350 mètres. Ces conduites flottantes ou sous-marines sont généralement celles qui travaillent dans les conditions les plus sévères du fait d'un rayon de courbure plus faible et d'une sollicitation dynamique plus forte due notamment au mouvement des supports flottants ainsi qu'une étanchéité plus difficile à maitriser vis-à-vis de l'environnement extérieur étant donné que la conduite flexible peut être immergée.

D'une manière générale, la conduite flexible comporte de l'intérieur vers l'extérieur plusieurs couches, à savoir :

- un tube intérieur ondulé, définissant une pluralité d'ondulations débouchant radialement vers l'axe de la conduite,
- au moins une couche d'armures de traction enroulées, disposée autour du tube ondulé,
- au moins une couche d'isolation thermique disposée autour de la couche d'armures, et
- une gaine extérieure étanche.

La couche d'armures de traction est formée par des armures de traction en acier inoxydable austénitique enroulées en hélice.

Les conduites flexibles comportent également des embouts de connexion destinés à leur raccordement entre elles ou avec des équipements terminaux et ces embouts doivent être réalisés dans des conditions assurant à la fois une bonne solidarisation et une bonne étanchéité.

En effet, les embouts de connexion doivent assurer plusieurs fonctions qui sont la fixation de l'extrémité du tube ondulé, l'ancrage des armures de traction ainsi que la protection thermique de la gaine externe et des moyens de sertissage de cette gaine externe.

Pour cela, les embouts de connexion comportent, entre autres, une bride d'extrémité destinée à se raccorder à une bride d'extrémité d'un autre embout de connexion ou d'équipements terminaux. La bride d'extrémité de l'embout de connexion est fixée sur l'extrémité libre du tube ondulé par un cordon de soudure étanche et éventuellement par d'autres moyens appropriés.

L'embout de connexion comporte également une voûte métallique enfilée sur l'extrémité du tube ondulé et sur laquelle sont fixées par soudage les extrémités des armures de ladite au moins une couche d'armures.

Mais, lorsque la conduite flexible est fortement sollicitée en traction et en flexion au voisinage de l'embout de connexion, la fixation par soudage des extrémités des armures peut s'avérer insuffisante et les soudures peuvent se rompre prématurément.

L'invention a pour but de proposer un ensemble d'un embout de connexion et d'une conduite flexible qui permet de réduire de manière importante les efforts transmis aux soudures des extrémités des armures lorsque la conduite est très fortement sollicitée en traction et en flexion.

WO 99/19656 et WO 01/07818 décrivent des embouts d'une conduite flexible dans lesquels l'extrémité des éléments d'armure est noyée dans la résine.

L'invention a donc pour objet un ensemble d'un embout de connexion et d'une conduite flexible de transport d'un fluide cryogénique selon la revendication 1.

L'ensemble selon l'invention peut comporter l'une ou plusieurs des caractéristiques des revendications 2 à 11, prises isolément ou suivant toutes les combinaisons techniquement possibles selon les revendications.

L'invention sera mieux comprise à la lecture de la description qui va suivre, donnée uniquement à titre d'exemple et faite en se référant aux dessins annexés, sur lesquels :

- la figure 1 est une vue en perspective et partielle d'une conduite flexible de transport d'un fluide cryogénique,
- la figure 2 est une demi-vue schématique et partielle en coupe axiale d'un ensemble d'un embout de connexion et d'une conduite flexible, conforme à l'invention,
- la figure 3 est une vue schématique en perspective d'un collier de serrage des portions d'extrémités des armures de l'ensemble, conforme à l'invention,
- la figure 4 est une vue schématique en coupe transversale des moyens élastiques de serrage du collier,
- les figures 5 à 8 sont des vues schématiques en coupe transversale du collier de serrage, montrant différentes formes de la zone d'appui sur les portions d'extrémités des armures,
- la figure 9 est une vue schématique en perspective d'une variante du collier de serrage, et
- les figures 10 à 12 sont des schémas illustrant le principe de serrage par frottement des portions d'extrémité des armures au moyen du collier.

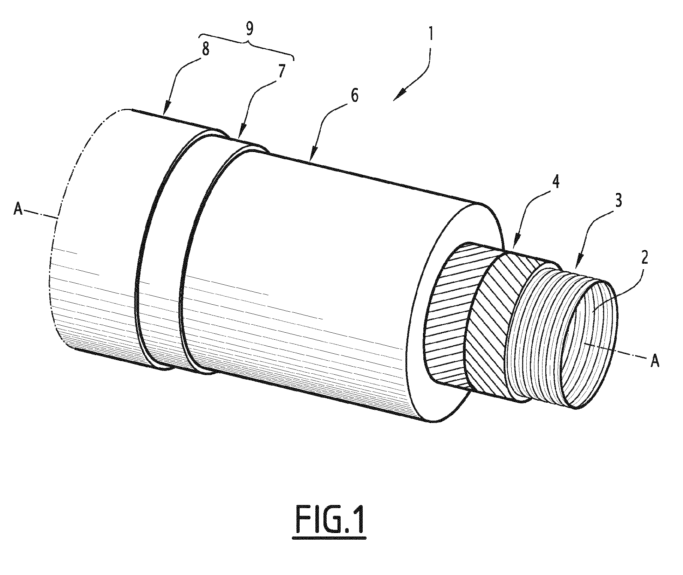

Sur la figure 1, on a représenté partiellement une conduite flexible 1 destinée à transporter un fluide cryogénique tel qu'un gaz liquéfié, depuis une unité de liquéfaction vers un navire de transport ou depuis un navire de transport vers une unité de stockage. La conduite 1 a par exemple une longueur supérieure à 30 mètres et comprise notamment entre 30 et 350 mètres. Elle délimite un passage central 2 de circulation du fluide cryogénique d'axe AA.

A tire d'exemple, la conduite flexible 1 comprend de l'intérieur vers l'extérieur :

- un tube intérieur 3 ondulé en acier inoxydable, propre à assurer l'étanchéité au fluide et la résistance à la pression interne,
- au moins une paire de couches 4 d'armures de traction enroulées en hélice, notamment en acier inoxydable austénitique, propre à supporter les charges axiales appliquées par la conduite 1,
- un ensemble de couches 6 d'isolation thermique à base d'aérogel, et
- une gaine externe 9 étanche constituée de deux gaines polymériques tubulaires 7 et 8 extrudées l'une sur l'autre. Cette redondance a pour but de garantir l'étanchéité externe de la conduite 1 de façon à empêcher l'eau de mer de pénétrer à l'intérieur de la paroi.

La conduite flexible 1 comporte à chacune de ses extrémités un embout de connexion destiné à relier plusieurs tronçons de conduite flexible entre eux et également destiné à relier la conduite flexible avec des équipements terminaux. Ces embouts de connexion doivent être réalisés dans des conditions assurant à la fois une bonne solidarisation et une bonne étanchéité.

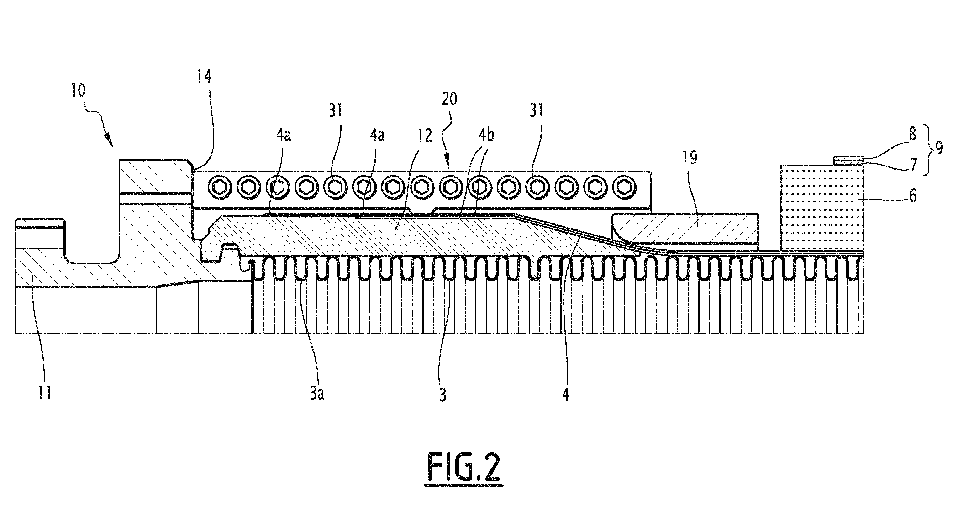

Sur la figure 2, on a représenté un ensemble d'un embout de connexion 10 et d'une conduite flexible 1.

Sur cette figure, seuls les éléments de l'embout de connexion 10 ayant un rapport avec l'invention, ont été représentés, les autres éléments composant cet embout de connexion ont été supprimés, afin de faciliter la compréhension.

Les différentes couches 3 à 9 composant la conduite flexible 1 ont été représentées en coupe axiale.

Ainsi que montré à la figure 2, l'embout de connexion 10 comporte une bride d'extrémité 11 solidaire de l'extrémité libre 3a du tube ondulé 3 par des moyens appropriés, de type connu. Cet embout de connexion 10 comporte également une voûte métallique 12 enfilée sur l'extrémité libre 3a du tube ondulé 3 et cette voûte métallique 12 comporte des moyens de liaison avec la bride d'extrémité 31, de type connu.

Ladite au moins une paire de couches d'armures 4 est formée par des armures métalliques dont les extrémités libres 4a sont fixées sur la face externe de la voûte métallique 12 par soudure. A proximité de la voûte métallique 12, les armures 4 sont maintenues par un collier de maintien 19 enfilé sur les couches d'amures.

Les armures de traction de la paire de couches d'armures croisées sont avantageusement enroulées avec des angles d'hélices sensiblement égaux en valeur absolue, mais opposés en signes. Ainsi, par exemple, si l'une des deux couches de la paire est enroulée avec un angle sensiblement égal à +35°, l'autre couche est enroulée avec un angle sensiblement égal à -35°. Cette caractéristique permet d'équilibrer la conduite 1 en torsion, c'est-à-dire de limiter sa tendance à tourner sous l'effet d'une traction.

Afin de limiter les frottements entre le tube intérieur 3 et les couches d'armures 4, des couches anti-frottement non représentées sur la figure 1 sont avantageusement intercalées entre ces couches métalliques. Ces couches anti-frottement peuvent notamment être réalisées par enroulement d'un ruban polymérique en polyamide ou en PTFE.

L'angle d'hélice des couches d'armures 4 de traction est avantageusement compris entre 20 et 50°.

Comme montré à la figure 2, l'ensemble comprend un collier de serrage 20, des portions d'extrémités 4b des armures 4 sur la voûte métallique 12.

Le collier de serrage 20 comprend au moins deux secteurs d'appui 21, propres à être assemblés pour former le collier de serrage 20. Ainsi, la somme des angles interceptant les secteurs 21 est égale à 360°.

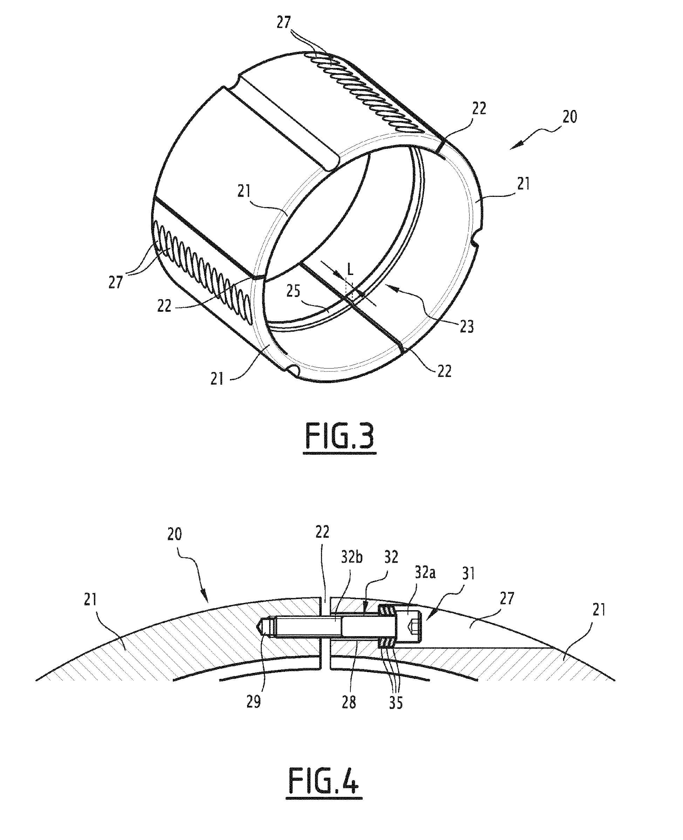

Le collier de serrage 20 est par exemple formé de secteurs de mêmes angles, notamment de deux secteurs 21 de 180° et de préférence, comme représenté à la figure 3, de trois secteurs 21 de 120°.

Les secteurs 21 du collier 20 ménagent entre eux (figures 3 et 4), un jeu intermédiaire 22 de quelques millimètres, ajusté au montage par calage et permettant de compenser les phénomènes de dilatation thermique de la conduite 1.

D'une manière générale, les secteurs 21 du collier 20 comportent intérieurement une zone cylindrique 23 de serrage de largeur L égale ou supérieure à 15 mm. Les secteurs 21 du collier 20 sont reliés entre eux par des moyens élastiques 31 (figure 4) de serrage aptes à appliquer sur les portions d'extrémités 4b des armures 4 par la zone de serrage 23, une pression de serrage égale ou supérieure à 75 MPa.

De préférence, la zone cylindrique 23 de serrage présente une largeur L comprise entre 15 et 200 mm.

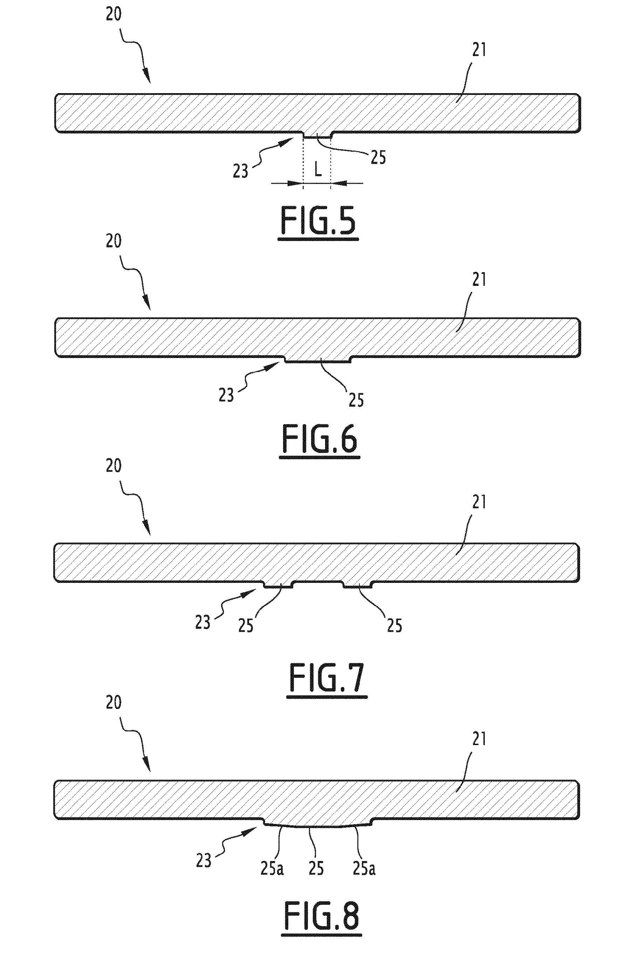

Ainsi que montré sur les figures 5 à 8, la zone de serrage 23 des secteurs 21 du collier 20 est formée par au moins un appui cylindrique 25.

A titre d'exemple, l'appui cylindrique 25 présente une largeur L de l'ordre de 15 mm ou l'appui cylindrique 25 présente une largeur L de l'ordre de 50 mm.

Selon une variante représentée à la figure 7, la zone de serrage 23 est formée par deux appuis cylindrique 25 parallèles. De préférence, l'appui cylindrique 25 situé du côté de la bride d'extrémité 11 de l'embout 10 présente un diamètre légèrement inférieur au diamètre de l'appui cylindrique 25 situé du côté de la conduite flexible 1 de façon à serrer un peu moins du côté de ladite conduite flexible que du côté de ladite bride.

Selon une variante représentée à la figure 8, l'appui cylindrique 25 présente de chaque côté une portée conique 25a de façon à assurer un serrage progressif des armures 4 et ainsi à éviter les phénomènes de concentration de contrainte. Une telle portée conique 25a est plus utile du côté de la conduite flexible 1 que du côté de la bride d'extrémité 11 car les fils des armures 4 sont mobiles du côté de la conduite flexible 1 et fixes de l'autre côté. Le fait de serrer progressivement les fils mobiles avant de les bloquer fermement permet de réduire le risque de fatigue, notamment dans le cas d'applications très sévères.

Les différentes variantes représentées sur les figures 5 à 8 présentent toute une symétrie par rapport au plan transversal situé à mi-longueur du collier 20. Cette caractéristique n'est cependant pas indispensable, et le collier pourrait parfaitement comporter un ou plusieurs appuis 25 non symétriques.

Le fait d'avoir plusieurs appuis 25 au lieu d'un seul présente l'avantage de faciliter le montage. Dans ce cas, l'axe du collier se positionne naturellement parallèlement à celui de la voûte métallique 12 sans avoir besoin de caler le collier 20 pour éviter un éventuel basculement angulaire.

Comme montré sur les figures 2 à 4, les moyens 31 élastiques de serrage comprennent, au niveau de chaque jeu 22 entre deux secteurs 21, une série d'organes de vissage 32 constitués par des vis ou des boulons s'étendant perpendiculairement à l'axe longitudinal du collier 20.

A titre d'exemple, chaque série d'organes de vissage 32 est composée de trente organes de vissage.

La tête 32a de chaque organe de vissage 32 est logée dans un alésage 27 ménagé dans un secteur 21 et le corps 32b dudit organe de vissage 32 traverse ce secteur 21 par un orifice 28. La partie filetée du corps 32b vient se visser dans un orifice taraudé 29 ménagé dans le secteur 21 adjacent, et en alignement avec l'orifice 28.

Chaque organe de vissage 32 est associé à un élément élastique 35, du type ressort ou rondelle à ressort, interposé entre la tête 32a de l'organe de vissage 32 correspondant et le fond de l'alésage 27.

La pression de serrage appliquée par ledit au moins un appui cylindrique 25 sur les portions d'extrémité 4b des armures 4 est comprise entre 75 et 300 MPa.

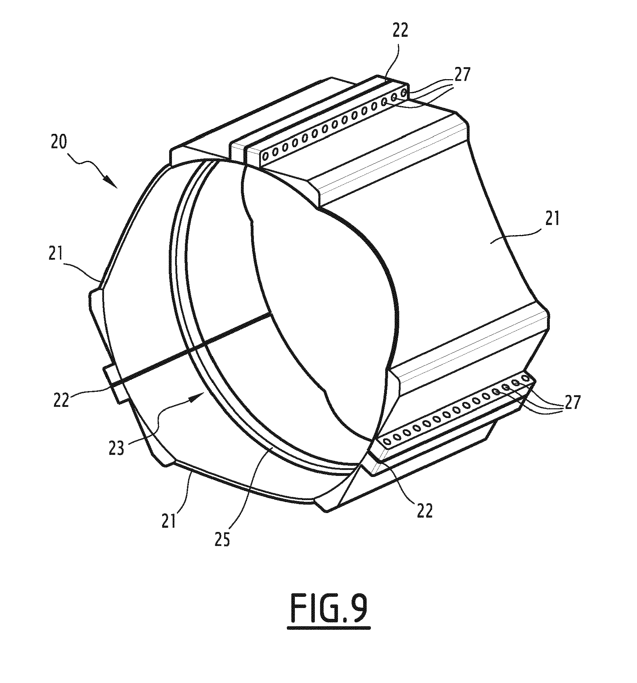

Dans le but de réduire le poids du collier 20, ainsi que montré à la figure 9, l'épaisseur et/ou la largeur des secteurs 21 composant ce collier sont réduites. L'encombrement est fixé par les trente organes de serrage 31 disposés en quinconce. L'encombrement au niveau des zones de jonction n'est pas réduit. Pour cela et comme représenté sur cette figure, les emplacements des organes de serrage 31 sont disposés en saillie.

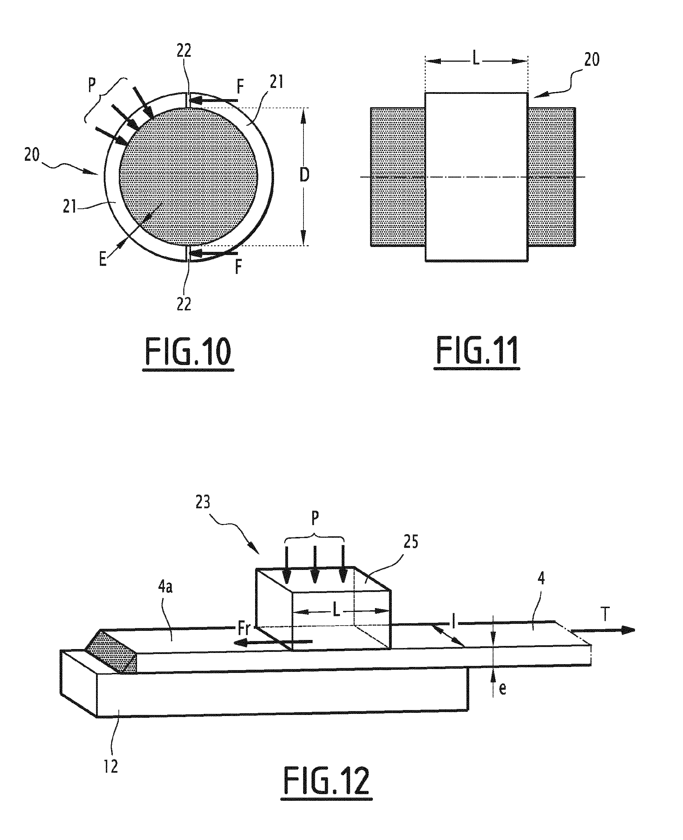

Les figures 10 et 11 illustrent le principe du serrage avec un collier 20 en deux parties. Le collier applique sur les armures 4 formant un noyau cylindrique une pression P qui dépend des dimensions du collier et de la force de serrage F appliquée sur chacun des jeux 22.

Dans le cas où l'épaisseur E du collier 20 est très inférieure à son diamètre intérieur D, la pression P suit la loi suivante :

$$P \approx \frac{2F}{DL} \qquad (1)$$

L étant la longueur du collier.

Cette formule reste valable pour un collier 20 comportant plus de deux secteurs 21, la répartition circonférentielle de la pression P étant meilleure lorsque le collier 20 comporte un grand nombre de secteurs 21. Trois secteurs 21 constituent un bon compromis.

Pour un collier 20 formé de trois secteurs 21, le collier comporte 90 organes de vissage 31 répartis en trois groupes de 30. Chaque organe de vissage 31 comprime un jeu de rondelles à ressort 35 présentant une force de rappel de l'ordre de 33000 N.

Par suite : $F = 30 \times 33000 \approx 1000000 \, N$     c'est-à-dire à peu près 100 tonnes.

De plus :     $E \approx 35 \, mm \, D \approx 515mm$.

En outre, la largeur de serrage du collier 20 est : L = 20 mm

Par suite, d'après l'équation (1) : $P \approx (2 \times 1000000) / (20 \times 515) = 194 \, MPa$.

La pression de serrage exercée par le collier 20 au niveau de l'appui cylindrique 25 central de largeur 20 mm est donc de l'ordre de 200 MPa.

Ce niveau très élevé de pression permet de reprendre la totalité de la tension appliquée aux fils d'armures 4 par effet de frottement.

En effet, en se basant sur l'illustration de la figure 12, la force Fr de retenue d'un fil d'armures 4 par effet de frottement est approximativement égale à :

$$Fr \approx fr \cdot P \cdot L \cdot l \qquad (2)$$

fr étant le coefficient de frottement entre le fil d'armures 4 et la voûte 12 et l étant la largeur du fil d'armure 4, le coefficient fr étant généralement compris entre 0,15 et 0,2.

Dans le cas présent, les fils d'armures 4 sont des fils rectangulaires en acier inoxydable de section l = 14mm x e = 2mm et de limite élastique Ys = 300 MPa.

Par suite : $Fr \approx 0,15 \times 200 \times 20 \times 14 = 8400 \, N$

Or, la tension maximale Tm que peut supporter chaque fil d'armures 4 en restant dans le domaine élastique est de l'ordre de :

$$Tm = Ys \cdot l \cdot e = 300 \times 14 \times 2 = 8400 \, N$$

Aussi, la soudure de chaque fil d'armures ne voit aucun effort, la totalité de la tension étant reprise par frottement.

Dans le cas où le coefficient de frottement est inférieur à 0,15 par exemple de l'ordre de 0,1 ce qui diminue Fr, la soudure reprend une partie de la tension.

La force Fr de retenue par frottement est proportionnelle au produit de la pression P par la largeur L (Equation (2)). En théorie, il n'est donc pas nécessaire d'imposer une pression P élevée dans la mesure où il est possible d'augmenter la largeur L. Ainsi, en se référant à l'exemple précédent, on peut obtenir le même résultat avec P = 40 MPa et L = 100mm au lieu de P = 200 MPa et L = 20mm.

Cependant, il a été découvert que la pression P doit être supérieure ou égale à 75 MPa de façon à compenser les imperfections géométriques des couches d'armures 4, une partie de cette pression étant utilisée pour plaquer correctement les fils, le reste servant à générer la force de retenue par frottement. Les imperfections géométriques sont notamment liées aux tolérances géométriques des fils (différences d'épaisseur entre fils voisins) et surtout à la difficulté de préformer les fils pour qu'ils aient une trajectoire hélicoïdale tout en conservant une base parfaitement en appui sur la voûte 12 ou sur la couche sous jacente.

C'est pourquoi en pratique les critères suivants doivent être respectés :

$$P \geq 75 \, MPa \quad et \, L \geq 15 \, mm.$$

Lorsque la conduite 1 est vide, la voûte 12 et le collier 20 ont sensiblement la même température, cette dernière étant proche de la température ambiante.

Lorsque la conduite transporte du gaz liquifié à -160°C, la température du collier 20 peut être de 30°C supérieure à celle de la voûte 12, si bien que le diamètre du collier a tendance à augmenter plus que celui de la voûte. L'augmentation relative $\Delta D$ du diamètre du collier étant liée à ce phénomène peut s'exprimer ainsi :

$$\Delta D / D \approx \alpha \, \Delta T \quad \Leftrightarrow \quad \Delta D \approx \alpha \, D \, \Delta T \qquad (3)$$

$\alpha$ étant le coefficient de dilatation thermique du matériau constituant la voûte 12 et le collier 20 et $\Delta T$ étant l'écart de température entre le collier 20 et la voûte 12.

La voûte, le collier et les armures sont avantageusement réalisés en acier inoxydable austénitique car ce matériau présente l'avantage de rester ductile à très basse température. Le coefficient de dilatation thermique des aciers inoxydables austénitiques est sensiblement plus élevé que celui des aciers au carbone (15 10$^{-6}$ K$^{-1}$ pour les inox austénitiques et 12 10$^{-6}$ K$^{-1}$ pour les aciers au carbone).

Dans le cas présent, D = 515mm, $\alpha$ = 15 10$^{-6}$ K$^{-1}$ et $\Delta$T = 30°. Par suite :

$$\Delta D \approx 15\ 10^{-6} \times 515 \times\ 30 \approx 0{,}23\ \text{mm}$$

Dans ces conditions, la variation relative du périmètre du collier est $\pi$ x $\Delta$D $\approx$ 0,73 mm.

Or, le collier comporte trois secteurs séparés par trois jeux, si bien que chaque jeu reprend 1/3 de cette variation, c'est-à-dire de l'ordre de 0,25 mm.

Pour éviter une perte de serrage lorsque la conduite 1 est en service, le collier 20 comporte des moyens 35 élastiques de serrage. Dans le cas présent, ces moyens 35 ont une course supérieure ou égale à 0,4 mm, cette course étant largement suffisante pour accommoder la variation de jeu de 0,25 mm associée aux phénomènes thermiques.

Une couche, non représentée, en matériau polymère est, de préférence, interposée entre la zone cylindrique 23 de serrage du collier 20 et la couche d'armures 4. Cette couche en matériau polymère d'épaisseur de l'ordre de 2cm évite le marquage de la couche d'armures, tout en transmettant la pression de serrage.

**Revendications**

**1.** Ensemble d'un embout de connexion (10) et d'une conduite flexible (1) de transport d'un fluide cryogénique, ladite conduite (1) comprenant un tube intérieur (3) ondulé, au moins une paire de couches croisées et superposées d'armures (4) de traction enroulées en hélice, disposée autour du tube ondulé (3), au moins une couche (6, 8) d'isolation thermique, disposée autour de la paire de couches d'armures (4) et une gaine externe (9) étanche et ledit embout (10) comprenant, entre autres, une bride d'extrémité (11) solidaire de l'extrémité libre (3a) du tube ondulé (3) et une voûte métallique (12) enfilée sur ladite extrémité du tube ondulé (3) et sur laquelle sont fixées par soudage les extrémités (4a) des armures (4) de ladite au moins une paire de couches d'armures, **caractérisé en ce qu'**il comprend un collier (20) de serrage des portions d'extrémités (4b) des armures (4) sur la voûte (12), formé d'au moins deux secteurs d'appui (21) comportant intérieurement une zone cylindrique (23) de serrage de largeur égale ou supérieure à 15 mm, les secteurs (21) du collier (20) ménageant entre eux un jeu intermédiaire (22) et étant reliés entre eux par des moyens (31) élastiques de serrage aptes à appliquer sur lesdites portions d'extrémités (4b) des armures (4) par la zone de serrage (23), une pression de serrage égale ou supérieure 75 MPa.

**2.** Ensemble selon la revendication 1, **caractérisé en ce que** le collier (20) comprend trois secteurs (21) d'appui.

**3.** Ensemble selon la revendication 1 ou 2, **caractérisé en ce que** la zone cylindrique (23) de serrage présente une largeur comprise entre 15 et 200 mm.

**4.** Ensemble selon l'une quelconque des revendications 1 à 3, **caractérisé en ce que** la pression de serrage appliquée sur la zone de serrage (23) des secteurs (21) du collier (20) est comprise entre 75 et 300 MPa.

**5.** Ensemble selon l'une quelconque des revendications 1 à 4, **caractérisé en ce que** les moyens (31) élastiques de serrage comprennent au niveau de chaque jeu (22) entre deux secteurs (21) adjacents, une série d'organes de vissage (32) reliant lesdits secteurs (21) et s'étendant perpendiculairement à l'axe longitudinal du collier (20), chaque organe de vissage (32) étant associé à un élément élastique (35), du type ressort ou rondelle.

**6.** Ensemble selon l'une quelconque des revendications 1 à 5, **caractérisé en ce que** la zone de serrage (23) est formée par au moins un appui cylindrique (25).

**7.** Ensemble selon l'une quelconque des revendications 1 à 6, **caractérisé en ce que** la zone de serrage (23) est formée par deux appuis cylindriques (25) parallèles.

**8.** Ensemble selon la revendication 7, **caractérisé en ce que** l'appui cylindrique (25) du côté de la bride d'extrémité (11) de l'embout (10) présente un diamètre légèrement inférieur au diamètre de l'appui cylindrique (25) du côté de la conduite flexible (1).

9. Ensemble selon l'une quelconque des revendications 1 à 8, **caractérisé en ce que** chaque appui cylindrique (25) présente de chaque côté une portion conique (25a).

10. Ensemble selon l'une quelconque des revendications 1 à 9, **caractérisé en ce qu'**une couche en matériau polymère est interposée entre la zone cylindrique (23) de serrage du collier (20) et la couche d'armures (4).

11. Ensemble selon l'une quelconque des revendications précédentes, **caractérisé en ce que** le collier (20) de serrage comprend deux secteurs d'appui de 180° ou comprend trois secteurs d'appui de 120°.


**Patentansprüche**

1. Einrichtung aus einem Kupplungsstück (10) und einer flexiblen Rohrleitung (1) zum Transport eines Kryogen-Fluid, wobei die Rohrleitung (1) aufweist ein welliges, inneres Rohr (3), wenigstens eine Paar von gekreuzten und überlagerten Schichten von Zug-Bewehrungen (4), die wendelförmig darum gewickelt sind, welches um das wellige Rohr (3) herum angeordnet ist, wenigstens eine Schicht (6, 8) zur thermischen Isolation, die um das Paar Schichten von Bewehrungen (4) herum angeordnet ist, und eine äußere, dichte Hülle (9), und wobei das Kupplungsstück (10) unter anderem aufweist einen Endflansch (11), der mit dem freien Ende (3a) der welligen Rohrleitung (3) fest verbunden ist, und ein metallisches Gewölbe (12), welches auf das besagte Ende des welligen Rohrs (3) aufgezogen ist und an welchem die Enden (4a) der Bewehrungen (4) des wenigstens einen Paares von Bewehrungen mittels Schweißens befestigt sind, **dadurch gekennzeichnet, dass** sie aufweist eine Rohrschelle (20) zur Einspannung von Endabschnitten (4b) der Bewehrungen (4) an dem Gewölbe (12), welche von wenigstens zwei Auflage-Abschnitten (21) ausgebildet ist, die innen einen zylindrischen Einspann-Bereich (23) mit einer Breite von gleich oder größer 15mm aufweisen, wobei die Abschnitte (21) der Rohrschelle (20) zwischen sich ein Zwischenspiel (22) bereitstellen und miteinander verbunden sind mittels federnden Einspann-Mitteln (31), die in der Lage sind, auf die besagten Endabschnitte (4b) der Bewehrungen (4) über den Einspann-Bereich (23) einen Einspanndruck von gleich oder größer 75 MPa auszuüben.

2. Einrichtung gemäß Anspruch 1, **dadurch gekennzeichnet, dass** die Rohrschelle (20) drei Auflage-Abschnitte (21) aufweist.

3. Einrichtung gemäß Anspruch 1 oder 2, **dadurch gekennzeichnet, dass** der zylindrische Einspann-Bereich (23) eine Breite hat, die zwischen 15 und 200 mm liegt.

4. Einrichtung gemäß irgendeinem der Ansprüche 1 bis 3, **dadurch gekennzeichnet, dass** der Einspann-Druck, der auf den Einspann-Bereich (23) der Abschnitte (21) der Rohrschelle (20) ausgeübt wird, zwischen 75 und 300 MPa liegt.

5. Einrichtung gemäß irgendeinem der Ansprüche 1 bis 4, **dadurch gekennzeichnet, dass** die federnden Einspann-Mittel (31) auf Niveau jedes Spiels (22) zwischen zwei benachbarten Abschnitten (21) eine Serie von Schraubelementen (32) aufweist, die mit den Abschnitten (21) verbunden sind und die sich senkrecht zu der Längsachse der Rohrschelle (20) erstrecken, wobei jedes Schraubelement (32) mit einem federnden Element (35) vom Typ Feder oder Scheibe in Verbindung steht.

6. Einrichtung gemäß irgendeinem der Ansprüche 1 bis 5, **dadurch gekennzeichnet, dass** der Einspann-Bereich (23) von wenigstens einer zylindrischen Auflage (25) gebildet ist.

7. Einrichtung gemäß irgendeinem der Ansprüche 1 bis 6, **dadurch gekennzeichnet, dass** der Einspann-Bereich (23) von zwei zylindrischen, parallelen Auflagen (25) gebildet ist.

8. Einrichtung gemäß Anspruch 7, **dadurch gekennzeichnet, dass** die zylindrische Auflage (25) auf Seiten des Endflanschs (11) des Kupplungsstücks (10) einen Durchmesser hat, der geringfügig kleiner ist als der Durchmesser der zylindrischen Auflage (25) auf Seiten der flexiblen Rohrleitung (1).

9. Einrichtung gemäß irgendeinem der Ansprüche 1 bis 8, **dadurch gekennzeichnet, dass** jede zylindrische Auflage (25) auf jeder Seite einen konischen Abschnitt (25a) hat.

**10.** Einrichtung gemäß irgendeinem der Ansprüche 1 bis 9, **dadurch gekennzeichnet, dass** eine Schicht aus Polymermaterial zwischen den zylindrischen Einspann-Bereich (23) der Rohrschelle (20) und die Schicht Bewehrungen (4) zwischeneingefügt ist.

**11.** Einrichtung gemäß irgendeinem der vorhergehenden Ansprüche, **dadurch gekennzeichnet, dass** die Einspann-Rohrschelle (20) zwei Auflage-Abschnitte von 180° oder drei Auflage-Abschnitte von 120° aufweist.

**Claims**

**1.** Assembly comprising a connection piece (10) and a flexible hose (1) for transporting a cryogenic fluid, said hose (1) comprising a corrugated inner tube (3), at least one pair of crossed and superposed layers of helically wound tensile armour wires (4), arranged around the corrugated tube (3), at least one thermal insulation layer (6, 8) arranged around the pair of layers of armour wires (4), and a sealed outer sheath (9), and said connection piece (10) comprising, inter alia, an end flange (11) secured to the free end (3a) of the corrugated tube (3) and a metal vault (12) which is threaded onto said end of the corrugated tube (3) and to which the ends (4a) of the armour wires (4) of said at least one pair of layers of armour wires are fastened by welding, **characterised in that** it comprises a collar (20) for clamping the end portions (4b) of the armour wires (4) to the vault (12), said collar being formed by at least two support sectors (21) comprising internally a cylindrical clamping zone (23) having a width equal to or greater than 15 mm, the sectors (21) of the collar (20) forming between them an intermediate gap (22) and being connected to one another by elastic clamping means (31) which are able to apply a clamping pressure equal to or greater than 75 MPa to said end portions (4b) of the armour wires (4) via the clamping zone (23).

**2.** Assembly according to claim 1, **characterised in that** the collar (20) comprises three support sectors (21).

**3.** Assembly according to claim 1 or 2, **characterised in that** the cylindrical clamping zone (23) has a width between 15 and 200 mm.

**4.** Assembly according to any one of claims 1 to 3, **characterised in that** the clamping pressure applied to the clamping zone (23) of the sectors (21) of the collar (20) is between 75 and 300 MPa.

**5.** Assembly according to any one of claims 1 to 4, **characterised in that** the elastic clamping means (31) comprise, at each gap (22) between two adjacent sectors (21), a series of screwing members (32) connecting said sectors (21) and extending perpendicular to the longitudinal axis of the collar (20), each screwing member (32) being associated with an elastic element (35) of the spring or washer type.

**6.** Assembly according to any one of claims 1 to 5, **characterised in that** the clamping zone (23) is formed by at least one cylindrical support (25).

**7.** Assembly according to any one of claims 1 to 6, **characterised in that** the clamping zone (23) is formed by two parallel cylindrical supports (25).

**8.** Assembly according to claim 7, **characterised in that** the cylindrical support (25) for the end flange (11) of the connection piece (10) has a diameter that is slightly smaller than the diameter of the cylindrical support (25) for the flexible hose (1).

**9.** Assembly according to any one of claims 1 to 8, **characterised in that** each cylindrical support (25) has a conical portion (25a) on each side.

**10.** Assembly according to any one of claims 1 to 9, **characterised in that** a layer of polymer material is interposed between the cylindrical clamping zone (23) of the collar (20) and the layer of armour wires (4).

**11.** Assembly according to any one of the preceding claims, **characterised in that** the clamping collar (20) comprises two 180° support sectors or comprises three 120° support sectors.

## FIG.1

FIG.2

FIG.3

FIG.4

20

21

23    25

L

## FIG.5

20

21

23    25

## FIG.6

20

21

23    25    25

## FIG.7

20

21

23    25a    25    25a

## FIG.8

## FIG.9

FIG.10

FIG.11

FIG.12

**EP 2 788 645 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9919656 A
- WO 0107818 A